# EUROPEAN PATENT APPLICATION

(11) **EP 4 790 521 A1**
(43) Date of publication of application: **12.08.2026**
(21) Application number: 26154621.2
(22) Date of filing: 28.01.2026
(51) Int. Cl.: G06F 1/28, G06F 1/30

(54) **VOLTAGE OVERSHOOT CONTROL CIRCUIT**

(30) Priority: 07.02.2025 US 202519048264
(71) Applicant: Microsoft Technology Licensing, LLC, Redmond, WA 98052 (US)
(72) Inventor: JAHAGIRDAR, Sanjeev, Redmond, 98052 (US); KANTHI, Basavaraj, Redmond, 98052 (US)
(74) Representative: CMS Cameron McKenna Nabarro Olswang LLP

(57) **Abstract**

Examples are disclosed relating to a circuit (600) for controlling voltage overshoot in a computing system. In one example, a circuit (600) comprises a network of shunt devices (602) arranged into a plurality of branches (604). Each branch (604) of the plurality of branches (604) includes shunt device(s) (602) connected to an enable pin (606) associated with the branch (604). Each shunt (602) is configured to induce current through a transistor (722) connected between a power node (726) and a ground node (728) when the shunt device (602) is activated. The circuit (600) comprises a controller (608) connected to a plurality of enable pins (606) corresponding to the plurality of branches (604) of the network. The controller (608) is configured to receive a computing processor voltage, generate a difference value indicating a difference between the processor voltage and a reference voltage, and send enable signal(s) to enable pin(s) (606) to activate the shunt devices (602) based at least on the difference value.

## Description

### BACKGROUND

In a computing processor, a processor demand current represents the total current required by the entire computing processor package, including not only the die but also package parasitics, voltage regulation circuitry, memory interfaces, and I/O subsystems. In a computing processor, there are events where the processor demand current reduces from a very high value to a very low value. As one example, such an event occurs when the computing processor transitions from an active state to an idle state. Such events can cause the voltage at the transistors of the computing processor to overshoot a setpoint operating voltage. Voltage overshoot can result in faster aging of the transistors, failure of the transistors, and/or overall degradation of the computing processor.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Examples are disclosed relating to a circuit for controlling voltage overshoot in a computing system. In one example, a circuit comprises a network of shunt devices arranged into a plurality of branches. Each branch of the plurality of branches includes shunt device(s) connected to an enable pin associated with the branch. Each shunt is configured to induce current through a transistor connected between a power node and a ground node when the shunt device is activated. The circuit comprises a controller connected to a plurality of enable pins corresponding to the plurality of branches of the network. The controller is configured to receive a computing processor voltage, generate a difference value indicating a difference between the processor voltage and a reference voltage, and send enable signal(s) to enable pin(s) to activate the shunt devices based at least on the difference value.

### BRIEF DESCRIPTION OF THE DRAWINGS

FIG. 1 shows an example model of a power delivery network of a computing system.
FIG. 2 shows an example impedance profile of the power delivery network of FIG. 1.
FIG. 3 shows di/dt events of a computing processor and corresponding voltage undershoot and voltage overshoot that can occur during the di/dt events.
FIG. 4 shows di/dt events of a computing processor and corresponding voltage undershoot and voltage overshoot that is limited using an adaptive voltage positioning (AVP) control strategy.
FIG. 5 shows an example circuit that is an equivalent of a voltage regulator module (VRM) of a computing system that is related to the AVP control strategy shown in FIG. 5.
FIG. 6 shows an example circuit for controlling voltage overshoot.
FIG. 7 shows an example shunt device that is employed in the circuit of FIG. 6.
FIG. 8 shows an example controller that is employed in the circuit of FIG. 6
FIGS. 9-10 show a flowchart of an example method for controlling the circuit of FIG. 6 that is performed by the controller of FIG. 8.
FIG. 11 shows an example implementation in which the circuit of FIG. 6 is included in a same integrated circuit as a computing processor.
FIG. 12 show an example implementation in which the circuit of FIG. 6 is included in an integrated circuit that is separate from an integrated circuit of a computing processor.

### DETAILED DESCRIPTION

In a computing processor, there are events where the processor demand current (or die demand current) reduces from a very high value to a very low value. As one example, such an event occurs when the computing processor transitions from an active state to an idle state. Such events can cause the voltage at the transistors of the computing processor to overshoot a setpoint operating voltage. Voltage overshoot can result in faster aging of the transistors, failure of the transistors, and/or overall degradation of the computing processor.

To address the issues described above, examples are disclosed relating to a circuit for controlling voltage overshoot in a computing system. In one example, a circuit comprises a network of shunt devices arranged into a plurality of branches. Each branch of the plurality of branches includes one or more shunt devices connected to an enable pin associated with the branch. Each shunt device of the one or more shunt devices is configured to induce current through a transistor connected between a power node and a ground node of the computing system when the shunt device is activated. The circuit further comprises a controller connected to a plurality of enable pins corresponding to the plurality of branches of the network of shunt devices. The controller is configured to receive a computing processor voltage of a computing processor of the computing system, generate a difference value that indicates a difference between the computing processor voltage and a reference voltage, and send one or more enable signals to one or more enable pins of one or more branches of the plurality of branches of the network of shunt devices to activate the shunt devices in the one or more branches based at least on the difference value indicating that the computing processor voltage is greater than the reference voltage.

By implementing the circuit including the network of shunt devices arranged in branches, different branches of shunt devices can be activated to dynamically compensate for different magnitudes of voltage overshoot that can occur during transient operation of the computing processor. By controlling voltage overshoot using the circuit in this manner, functional stress on transistors (and/or other electronic components) of the computing processor due to high voltage can be reduced. Moreover, by reducing the functional stress due to high voltage on the transistors (and/or other electronic components) of the computing processor, degradation of the transistors due to high voltage can be avoided and the operational lifespan of the computing processor can be extended. Furthermore, in some implementations, by implementing the circuit to control voltage overshoot, the computing processor can be designed with a reduction in capacitors that would otherwise be implemented to help reduce voltage overshoot. Such a reduction in capacitors in the computing processor can reduce the size, power consumption, and cost of the computing processor.

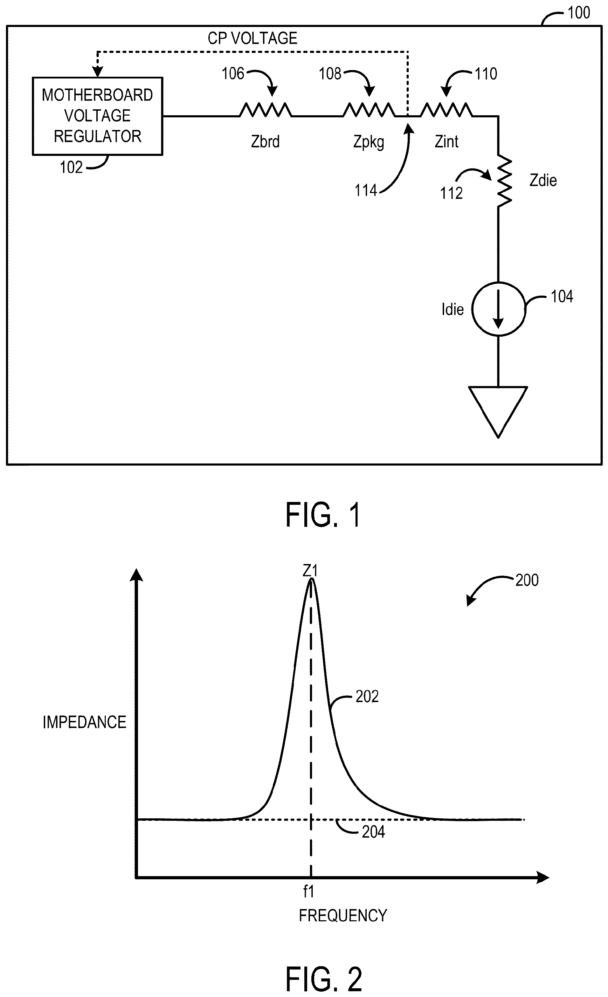

FIG. 1 shows a model of a power delivery network (PDN) 100 for an example computing system in which a circuit of the present disclosure can be implemented. The PDN 100 includes a motherboard voltage regulator (MBVR) 102 electrically connected to a current source 104 that models a demand current (Iidle) for the computing processor. A number of components that are positioned between the MBVR 102 and the current source 104 contribute to the overall impedance of the PDN 100. The impedance of the PDN 100 determines how effectively power is delivered to the computing processor. The PDN is designed to maintain low impedance across a broad frequency range to ensure stable voltages, reduce noise, and manage transient loads effectively during operation of the computing processor. The component impedances of the PDN 100 include a board level impedance (Zbrd) 106, a package impedance (Zpkg) 108, an interposer impedance (Zint) 110, and a die level impedance (Zdie) 112. At least one of the impedances can be caused due to RLC circuits including resistors (R), inductors (L), and capacitors (C) in the computing system. The RLC circuits are configured to manage and stabilize power supplied to the computing processor and/or other electronic components of the computing system. A sum of the component impedances of the PDN 100 including the board level impedance (Zbrd) 106, the package impedance (Zpkg) 108, the interposer impedance (Zint) 110, and the die level impedance (Zdie) 112 represents the impedance of the PDN 100.

In general, it is desirable to sense the load current of the computing processor voltage at a location in the PDN 100 where the system noise is relatively low in order to obtain an accurate measurement. In the illustrated example, the computing processor load current is sensed at a location 114 on the computing processor package that is spaced away from transistors of the computing processor that are sources of system noise. In other examples, the computing processor load current can be sensed at a different location of the PDN 100 where there is relatively low system noise.

FIG. 2 shows a graph 200 depicting an example impedance profile 202 in the frequency domain of the impedance of the PDN 100 shown in FIG. 1. Generally, the impedance (Z1) of the PDN 100 peaks at a frequency (f1), which causes the highest voltage overshoot (and a corresponding voltage undershoot) relative to a setpoint operating voltage 204 of the computing processor. Whenever the computing processor load current increases or decreases in a short time span (e.g., in a nanosecond to microsecond range for a computing processor that includes fast-switching transistors, like MOSFETs), voltage undershoot or voltage overshoot occurs due to the impedance of the PDN 100. Such transient events are referred to herein as di/dt events. In particular, the impedance of the PDN 100 create parasitic inductance that does not allow for a change in current across the PDN 100 as fast as the change in the load current of the computing processor itself.

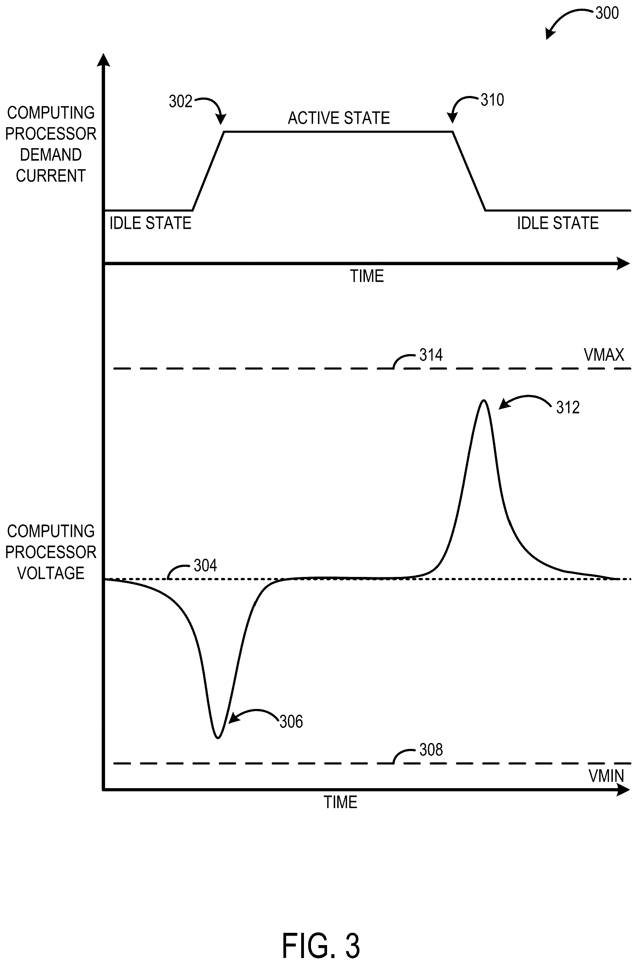

FIG. 3 shows a graph 300 depicting example di/dt events and corresponding voltage undershoot / overshoot. A first di/dt event 302 occurs when the computing processor transitions from an idle state to an active state and there is a sudden increase in computing processor demand current. The first di/dt event 302 causes the computing processor voltage to undershoot a setpoint operating voltage 304 of the computing processor causing a voltage undershoot event 306. During the voltage undershoot event 306, the operating voltage of the computing processor decreases close to a minimum tolerance voltage (VMIN) 308 that causes stress on the transistors of the computing processor. When left uncontrolled, voltage undershoot events can cause various issues, such as causing the transistors of the computing processor to miss timing windows for clock cycles resulting in errors or causing the computing system to crash. Moreover, repeated voltage undershoot events stress the PDN of the computing system and transistors of the computing processor over time, contributing to degradation of the computing processor and shortening its operational lifespan.

A second di/dt event 310 occurs when the computing processor subsequently transitions from the active state back to the idle state in a very short time span. The second di/dt event 310 causes the computing processor voltage to overshoot the setpoint operating voltage 304 causing a voltage overshoot event 312. During the voltage overshoot event 312, the operating voltage of the computing processor increases close to a maximum tolerance voltage (VMAX) 314 that causes stress on the transistors of the computing processor. When left uncontrolled, voltage overshoot events can cause various issues, such as causing faster aging of the transistors, failure of the transistors, and/or overall degradation of the computing processor.

Various approaches can be employed to help limit voltage undershoot and voltage overshoot. In one example, an adaptive voltage positioning (AVP) control strategy can be employed in which upper and lower setpoint operating voltages of the computing processor can be set higher / lower than the setpoint operating voltage 304 shown in FIG. 3. The upper and lower setpoint operating voltages increase a usable voltage range relative to the single setpoint operating voltage 304. The larger voltage ranges provides more available voltage to accommodate voltage undershoot and voltage overshoot events that can occur as a result of di/dt events.

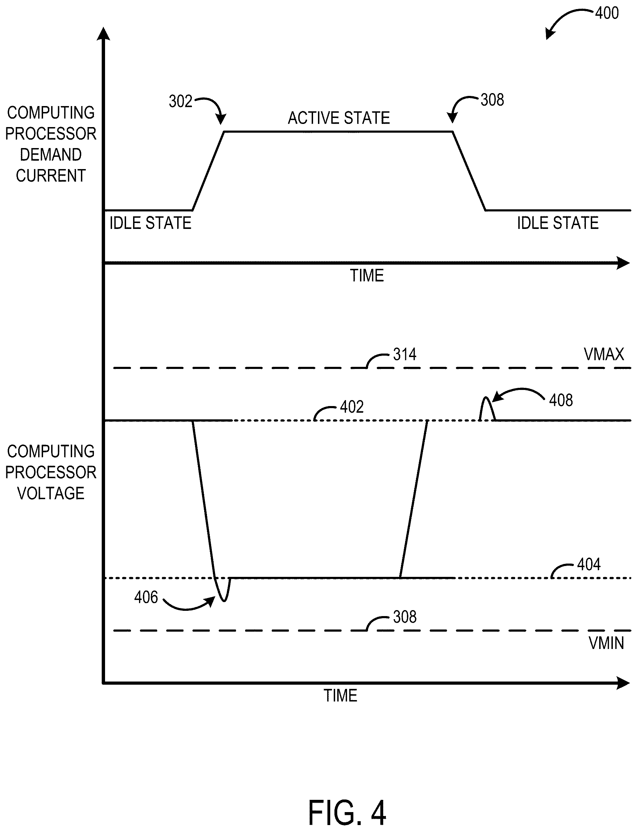

FIG. 4 shows a graph 400 depicting example operation of a computing processor that employs the AVP control strategy during the first and second di/dt events 302 and 310 shown in FIG. 3. According to the AVP control strategy, an upper setpoint operating voltage 402 is set slightly below the maximum tolerance voltage (VMAX) 314 and a lower setpoint operating voltage 404 is set slightly above the minimum tolerance voltage (VMIN) 308. The upper and lower setpoint operating voltages 402 and 404 define a voltage range that is close to the size of a voltage tolerance range (VMAX-VMIN) and can be used to accommodate a voltage decrease or increase during a di/dt event in which the computing processor demand current changes. In particular, during the first di/dt event 302 (e.g., a transition from a light load / idle state to a full load / active state), the computing processor voltage drops from the upper setpoint operating voltage 402 down to the lower setpoint operating voltage 404 with a degree of voltage undershoot causing a voltage undershoot event 406. Further during the second di/dt event 310, the computing processor voltage increases from the lower setpoint operating voltage 402 up to the upper setpoint operating voltage 402 with a degree of voltage overshoot causing a voltage overshoot event 408.

The voltage undershoot event 406 is significantly smaller than that of the voltage undershoot event 306 shown in FIG. 3. Likewise, the voltage overshoot event 408 is significantly smaller than that of the voltage overshoot event 312 shown in FIG. 3. This is due to the larger voltage range created by the upper and lower setpoint operating voltages 402 and 404.

Note that the AVP control strategy allows for the computing processor to be designed with the use of fewer output capacitors that would otherwise be needed to protect against voltage undershoot and voltage overshoot were the non-AVP control strategy to be used. The reduction in the number of output capacitors used in the computing processor would reduce the overall cost, size, and power consumption of the computing processor.

In an ideal implementation of the AVP control strategy, during the transient changes in voltage between the two steady states (high load / active and low load / idle) there is no voltage spikes and no voltage oscillations due to voltage undershoot or voltage overshoot. As such, the transient changes in voltage can take advantage of the entire voltage tolerance window between the minimum voltage tolerance (VMAX) and the maximum voltage tolerance (VMIN).

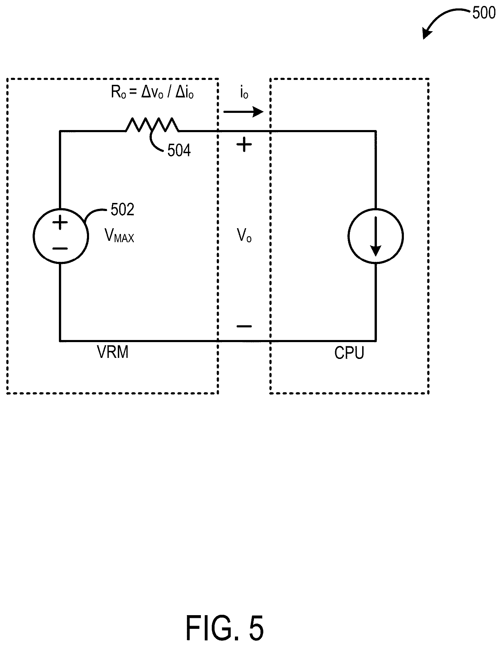

The ideal AVP control strategy is related to the steady-state operation of a voltage regulator module (VRM) of the computing system. FIG. 5 shows an example circuit 500 that is an equivalent of the VRM of the computing system. A comparison between the computing processor demand current (io) and the related output voltage waveforms (vo) generated according to the ideal AVP control strategy reveals that the VRM 502 equals an ideal voltage source in series with a resistor 504 having resistance (Ro) given by Equation (1): ${R}_{o} = Δ {v}_{o} / Δ {i}_{o}$

With reference to Equation (1), Rₒ is also referred to as the AVP loadline (AVPLL). As such, Equation (2) can be defined as below. ${V}_{die} = VID - I ∗ AVPLL$ where I is the computing processor demand current, V_{die} is the computing processor voltage (i.e., Vₒ in FIG. 5). Further, VID is the voltage setpoint set at the voltage regulator (VMAX in FIGS. 4/5), since there is no voltage overshoot in the ideal implementation of the AVP control strategy. Equation (2) shows that when the computing processor demand current (*I*) increases, the computing processor voltage (V_{die}) decreases and as the computing processor current (*I*) increases, the computing processor voltage (V_{die}) decreases.

In some examples, a high performance computing (HPC) system that employs an AVP control strategy is designed to have a very low lower setpoint operating voltage in order to limit power consumption of the HPC system. Thus, efforts are made to set the VID to a lowest possible value within the design tolerances of the HPC system. Although undershoot and overshoot may be of similar magnitudes, to keep the VID to lowest value, numerous undershoot mitigation methods can be employed in the HPC system. This results in very small margin for the AVP loadline before bumping up against the tolerance voltage (VMAX in FIG. 4) of the computing system. With a smaller margin, the computing processor voltage (Vdie) will be very close to the voltage setpoint (upper setpoint operating voltage 402 shown in FIG. 4) set at the voltage regulator (VID), and the overshoot can still be very high, in some scenarios. Thus, employing the AVP control strategy alone to control operation of an HPC system can still produce relatively high voltage overshoot that can cause degradation of the HPC system.

Accordingly, a circuit according to the disclosed examples can be included in a computing system to provide an additional / alternative way of controlling voltage overshoot during di/dt events that can be used with or without the AVP control strategy.

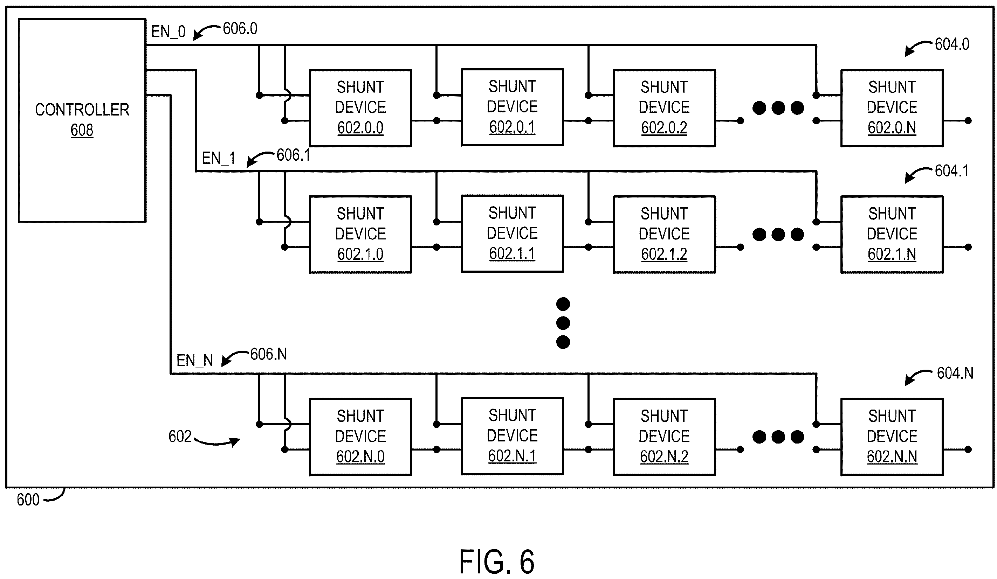

FIG. 6 shows an example circuit 600 for controlling voltage overshoot during di/dt events according to one implementation of the present disclosure. The circuit 600 includes a network of shunt devices 602 arranged into a plurality of branches 604 (e.g., 604.0, 604.1, 604.N). Each branch of the plurality of branches 604 includes one or more shunt devices 602 connected to an enable pin 606 (e.g., 606.0, 606.1, 606.N) associated with the branch 604. In the illustrated example, the circuit 600 includes "N" branches, and each branch includes N shunt devices. As one example, the branch 604.0 includes the shunt device 602.0.0, 602.0.1, 602.02, and 602.0.N.

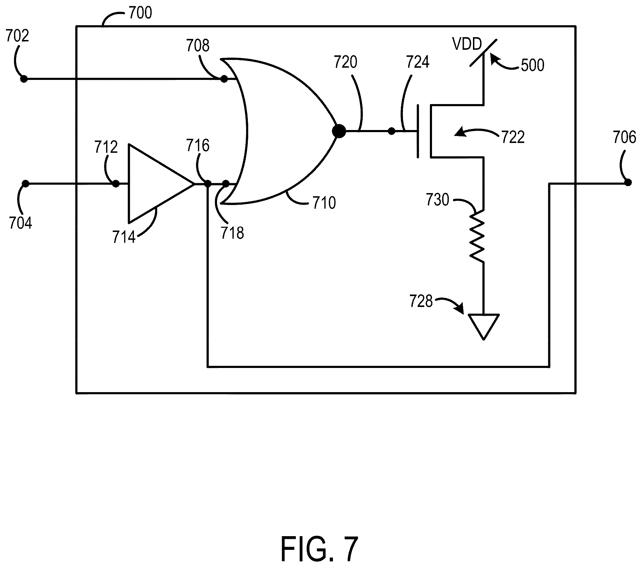

FIG. 7 shows an example shunt device 700. For example, the shunt device 700 can be representative of any of the shunt devices of the network of shunt devices 602 shown in FIG. 6. The shunt device 700 includes a first input pin 702, a second input pin 704, and an output pin 706. The first input pin 702 is connected to an enable pin of a corresponding branch in which the shunt device 700 is arranged (e.g., enable pin 606.0 associated with the branch 604.0 shown in FIG. 6). The first input pin 702 is further connected to a first input 708 of a NOR gate 710. The second input pin 704 is connected to an input 712 of a delay buffer 714. An output 716 of the delay buffer 714 is connected to a second input 718 of the NOR gate 710. The output pin 706 of the shunt device 700 is connected between the output 716 of the delay buffer 714 and the second input 718 of the NOR gate 710. An output 720 of the NOR gate 710 is connected to a gate 724 of a transistor 722. The transistor 722 is connected between a power node (e.g., VDD) 726 and a ground node 728 of the computing system.

In some implementations, the transistor is a PMOSFET. In other implementations, the transistor is a different type of transistor other than a PMOSFET.

In one example, the shunt device 700 is configured to activate when either of the first input pin 702 or the second input pin 704 is logic 1. When the shunt device 700 is activated, the gate 724 of the transistor 722 receives a signal from the output 720 of the NOR gate 710 that turns on the transistor 722 and causes the transistor 722 to induce current. The amount of current that is induced by the transistor 722 when activated is dependent on a resistance of the transistor 722. The resistance of the transistor 722 may be at least on the size of the transistor 722 that is employed in the shunt device 700. The shunt device 700 is activated to induce current during a di/dt event where the computing processor demand current drops quickly causing voltage overshoot. By inducing current through the transistor 722, the drop in current of the computing processor is slowed to limit voltage overshoot.

In some implementations, the shunt device 700 may optionally include a supplemental resistor 730 connected in series with the transistor 722. The supplemental resistor 730 provides additional resistance that can be used to induce current beyond the capabilities of the transistor 722 itself. The size of the supplemental resistor 730 can depend on the size of the transistor 722 and the power specifications of the computing system in which the shunt device 700 is employed.

The shunt device 700 is configured to deactivate when both the first input pin 702 and the second input pin 704 are logic 0. When the shunt device 700 is deactivated, the gate 724 of the transistor 724 receives a signal from the output 720 of the NOR gate 710 that turns off the transistor 722 such that the transistor 722 does not induce current. Further, the signal on the second input pin 704 is provided to the input 712 of the delay buffer 714. The delay buffer 714 holds the signal for a designated duration (e.g., half a clock cycle, a full clock cycle), and then outputs the signal to the output pin 706 of the shunt device.

Returning to FIG. 6, each of the shunt devices 602 in a branch 604 are connected to one another in a "daisy chain" arrangement. In the example of the first branch 604.0, a first input pin and a second input pin of a first shunt device 602.0.0 are both connected to a first enable pin (EN_0) 606.0. An output pin of the first shunt device 602.0.0 is connected to a second input pin of a second shunt device 602.0.1 in the first branch 604.0. The first input pin of the second shunt device 602.0.1 is connected to the first enable pin (EN_0) 606.0. An output pin of the second shunt device 602.0.1 is connected to a second input pin of a third shunt device 602.0.2 of the first branch 604.0. A first input pin of the third shunt device 602.0.2 is connected to the first enable pin (EN_0) 606.0. Each successive shunt device in the first branch 604.0 is connected in the same manner according to the daisy chain arrangement, such that the output pin 706 of each shunt device 602.0.2-N in the first branch 604.0 other than the first shunt device 602.0.0 is connected to a second input pin of a next shunt device 602 in the first branch 604.0.

Each of the shunt devices 602 in the different branches 604 of the circuit 600 are connected in the same manner as described above. Such a daisy chain arrangement allows for all of the shunt devices 602 in a given branch 604 to be activated in unison without delay based at least on an enable signal being sent to the enable pin 606 corresponding to that branch. By activating all of the shunt devices 602 in the branch 604 in unison, all of the shunt devices can quickly induce current to limit voltage overshoot in a timely manner during a di/dt event.

Furthermore, by employing the delay buffer 714 in each of the shunt devices 602 and connecting the output pin 706 to the output 716 of the delay buffer 714 in conjunction with the daisy chain arrangement, the shunt devices 602 in a given branch 604 are deactivated one by one in a cascade along the branch when a disable signal is sent to the enable pin 606 corresponding to the branch 604. By deactivating the shunt devices one by one, the change in current inducted by the shunt devices 602 is slowed, so as not to induce voltage overshoot as a result of the shunt devices 602 being deactivated too quickly after being activated to initially limit voltage overshoot.

The number of shunt devices 602 in each branch 604 and the number of branches 604 in the circuit 600 is determined based at least on the size / resistance of the transistors 722 (and/or supplemental resistors 730) in each shunt device 602 and the total amount of current required to be induced by the circuit 600 for the particular computing system in which the circuit 600 is implemented. For example, the higher the current of the computing system, the greater the number of shunt devices 602 in each branch 604, and the greater the number of branches 604 in the circuit 600. The number of branches included in the circuit 600 may depend on the granularity of control desired to limit different levels of voltage overshoot.

In some implementations, the number of branches 604 of the network of shunt devices 602 and the number of shunt devices 602 per branch 604 are based at least on a voltage tolerance range of components of the computing processor. Further, in some examples, a total overhead voltage that is a difference between a reference voltage / setpoint voltage and a maximum tolerance voltage of the computing processer can be divided into steps that correspond to the number of branches of the circuit 600 and define the granularity of control.

In some implementations, the shunt devices 602 of the circuit 600 are connected at regular (substantially equal) distances throughout the computing processor to induce currents across different regions of the computing processor when activated. By connecting the shunt devices at regular distances across the computing processor, no one region of the computing processor is subject to the stress of induced current when the shunt devices are activated relative to other regions of the computing processor.

The circuit 600 includes a controller 608 that is connected to the plurality of enable pins 606 corresponding to the plurality of branches 604 of the network of shunt devices 602. The controller 608 is configured to control operation of the network of shunt devices 602 by enabling and disabling different branches 604 of the network of shunt devices 602 to induce an appropriate amount of current to limit voltage overshoot during a di/dt event of the computing processor.

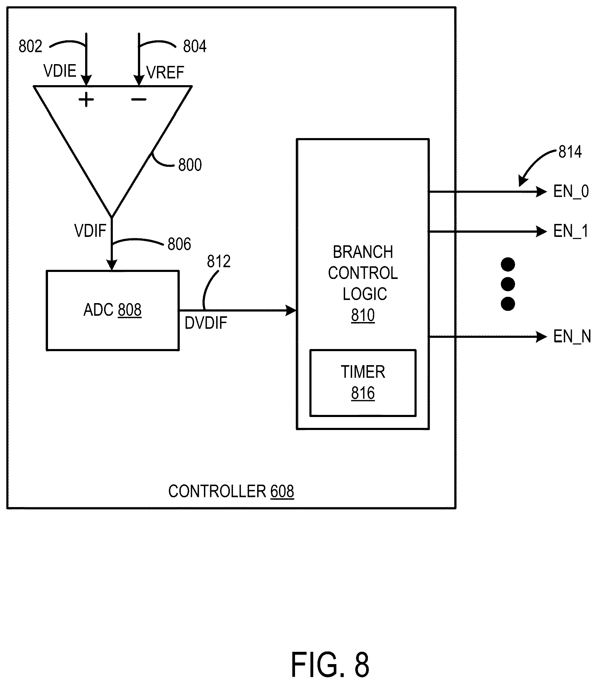

FIG. 8 shows an example implementation of the controller 608 included in the circuit 600 shown in FIG. 6. The controller 608 includes a comparator 800 that is configured to receive a computing processor voltage (VDIE) 802. For example, the computing processor voltage 802 can be measured at a C4 bump on a package of the computing processor (e.g., location 114 shown in FIG. 1) where system noise is lower relative to a location on a motherboard of the computing system. The comparator 800 is configured to compare the computing processor voltage 802 against a reference voltage (VREF) 804 and output a difference value 806 (VDIF) between the computing processor voltage 802 and the reference voltage 804. The computer processor voltage 802 can be repeatedly received or updated over time, and correspondingly the difference value 806 can be repeatedly calculated and output over time as the computer processor voltage 802 is updated. The computer processor voltage 802 and/or the difference value 806 can be updated according to any suitable frequency / update rate.

The reference voltage is set based at least on designated voltage tolerances of components of the computing processor. In an example where a computing processor is controlled using the AVP control strategy (such as shown in FIG. 4), the computing processor is configured to have a voltage tolerance range including a maximum tolerance voltage and a minimum tolerance voltage. According to the AVP control strategy, the computing processor is configured to, during an active / full load state, operate at a lower voltage setpoint (e.g., 404 shown in FIG. 4) that is closer to minimum tolerance voltage (e.g., 308 shown in FIG. 4) than the maximum tolerance voltage (e.g., 314 shown in FIG. 4). Further, the computing processor is configured to, during an idle / light load state, operate at an upper setpoint voltage (e.g., 402 shown in FIG. 4) that is closer to the maximum tolerance voltage (e.g., 314) than the minimum tolerance voltage (308). In this example, the reference voltage 804 can be set greater than or equal to the upper setpoint voltage (e.g., 402 shown in FIG. 4). In other examples, the reference voltage 804 can be set to a different voltage level.

The comparator 800 is connected to an analog-to-digital converter (ADC) 808. The ADC 808 is further connected to branch control logic 810. The difference value 806 output by the comparator 800 is an analog value that is provided as input to the ADC 808. The ADC 808 is configured to convert the analog difference value 806 to a digital difference value (DVDIF) 812 and output the digital difference value 812 to branch control logic 810.

The branch control logic 810 is configured to selectively enable and disable branches 604 of the circuit 600 to induce an appropriate amount of current through the shunt devices 602 to slow the drain of current and limit voltage overshoot during a di/dt event. More particularly, the branch control logic 810 is configured to send one or more enable signals 814 to one or more enable pins 606 of one or more branches 604 of the plurality of branches of the network of shunt devices 602 to activate the shunt devices 602 in the one or more branches 604 based at least on the digital difference value 812 indicating that the computing processor voltage 802 is greater than the reference voltage 804. In some examples, a number of enable signals 814 that are sent by the branch control logic 810 to activate a corresponding number of branches 604 of shunt devices 602 of the network of shunt devices 602 is based at least on a magnitude of the digital difference value 812. For example, the greater the difference value, the greater the number of branches that are enabled by the branch control logic 810. Having multiple branches 604 in the circuit 600 enables the branch control logic 810 to activate shunt devices in phases so as not to induce a maximum amount of current for all cases of voltage overshoot. In this way, the branch control logic 810 can adjust the amount of current that is induced by the shunt devices according to the magnitude of the particular voltage overshoot event.

The network of shunt devices 602 is configured such that a plurality of shunt device in a branch of the plurality of branches is configured to activate in unison based on an enable signal being sent to the enable pin for the branch. In this way, current is induced in each shunt device in the branch without delay in order to limit voltage overshoot in a timely manner during a di/dt event.

As branches 604 of the network of shunt devices 602 are activated to limit voltage overshoot, the computer processor voltage 802 is updated, and correspondingly the difference value 806 is updated. Based at least on the updated computing processor voltage being greater than the reference voltage 804 and the updated difference value being greater than the difference value 806, the branch control logic 810 is configured to send one or more enable signals to one or more additional enable pins of one or more additional branches of the plurality of branches of the network of shunt devices to activate additional shunt devices in the corresponding one or more additional branches. In other words, the branch control logic 810 will continue to enable additional branches 604 of shunt devices 602 until the computer processor voltage stops increasing and begins to reduce.

Once the computer processing voltage 802 starts to reduce after exceeding the reference voltage 804 as a result of activating branches 604 of shunt devices 602 to induce current, the branch control logic 810 is configured to based at least on the updated computing processor voltage being greater than the reference voltage 804 and the updated difference value being less than the previously calculated difference value, send one or more disable signals to one or more enable pins of one or more branches of the plurality of branches 604 of the network of shunt devices 602 to deactivate the shunt devices one by one in the corresponding branch. Additionally, in order to not disable the shunt devices 602 immediately and cause subsequent voltage overshoot and/or cause voltage oscillations in the computing processor, in some implementations, the branch control logic 810 is configured to execute a timer 816 that is configured to make the branch control logic 810 wait a designated delay time in between sending disable signals to different branches, causing the branches of shunt devices to be disabled one at a time. For example, the designated delay time can be one or more nanoseconds or another suitable duration to prevent voltage overshoot from occurring as a result of the branches of shunt devices being deactivated.

The timer 816 provides delays between disabling branches 604 of shunt devices 602 within the circuit 600. Further, the delay buffers 714 (shown in FIG. 7) in the shunt devices 602 and the daisy chain arrangement of the shunt devices 602 within a given branch 604 provide delays between deactivating individual shunt devices 602 within the given branch 604, such that a plurality of shunt device in a branch deactivate one at a time in a cascade along the branch based at least on a disable signal being sent to the enable pin for the branch. These two features allow for a sudden reduction in current upon signal de-assertion and resulting voltage overshoot / oscillations to be avoided.

In one example, the reference voltage (Vref) 804 is set to 700mV based at least on operating tolerances of components of the computing processor. More particularly, the maximum acceptable overshoot voltage (Vmax) for the components of the computing processor is 800mV. A computing processor voltage greater than the maximum acceptable overshoot voltage (Vmax) can cause degradation of the components of the computing processor or other issues. The reference voltage (Vref) is set below the maximum acceptable overshoot voltage (Vmax), so as not to stress the components of the computing processor. The difference of Vmax and Vref is 100mV, which can be divided into 10 steps / branches 604 of the circuit 600. The number of branches 604 of the circuit 600 can be designed to have any suitable voltage control granularity. For this example, the branch control logic 810 is configured to generate 10 enable (EN) signals corresponding to 10 branches. For this example, the maximum current necessary to limit the voltage overshoot to Vmax is set as Imax. The number of branches in the circuit 600 is specified by the maximum current (Imax) / (the maximum current induced collectively by the number of shunt device in each branch). By having multiple branches of shunt devices, the circuit 600 can enable the branches 604 of shunt devices 602 in phases, so as to not induce Imax in all cases of voltage overshoot. In this way, the current inducer circuit can be controlled to dynamically react to different levels of voltage overshoot while not overreacting to cases of smaller volage overshoot. The capabilities of the current inducer circuit can be scaled to compensate for any suitable levels of voltage overshoot by adding more branches of shunt devices and/or more shunt devices per branch.

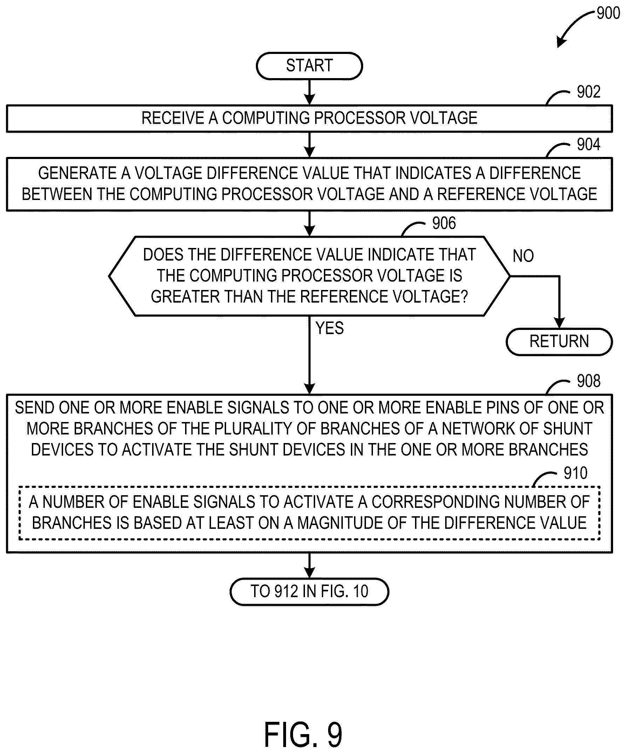

FIGS. 9-10 show an example method 900 for controlling the circuit 600 shown in FIG. 6 to limit voltage overshoot in a computing system. For example, the method 900 may be performed by the controller 608 shown in FIGS 6 and. 8. Steps of the method 900 that are shown in dotted lines may be performed optionally in some implementations.

In FIG. 9, at 902, the method 900 includes receiving a computing processor voltage of a computing processor of the computing system in which the circuit is implemented. At 904, the method 900 includes generating a difference value that indicates a difference between the computing processor voltage and a reference voltage. At 906, the method 900 includes determining that the difference value indicates that the computing processor voltage is greater than the reference voltage. In one example, if the difference value is positive, then the computing processor voltage is greater than the reference voltage, and if the difference value is negative, then the computing processor voltage is less than the reference voltage. If the difference value indicates that the computing processor voltage is greater than the reference voltage, then the method 900 moves to 906. Otherwise, there is currently no voltage overshoot event and the method 900 returns to monitoring for a voltage overshoot event. At 906, the method 900 includes sending one or more enable signals to one or more enable pins of one or more branches of the plurality of branches of the network of shunt devices to activate the shunt devices in the one or more branches based at least on the difference value indicating that the computing processor voltage is greater than the reference voltage. In some implementations, at 910, a number of enable signals that are sent to activate a corresponding number of branches of shunt devices may be based at least on a magnitude of the difference value. For example, the greater the magnitude of the difference value, then the greater the number of branches that are enabled via the enable signals.

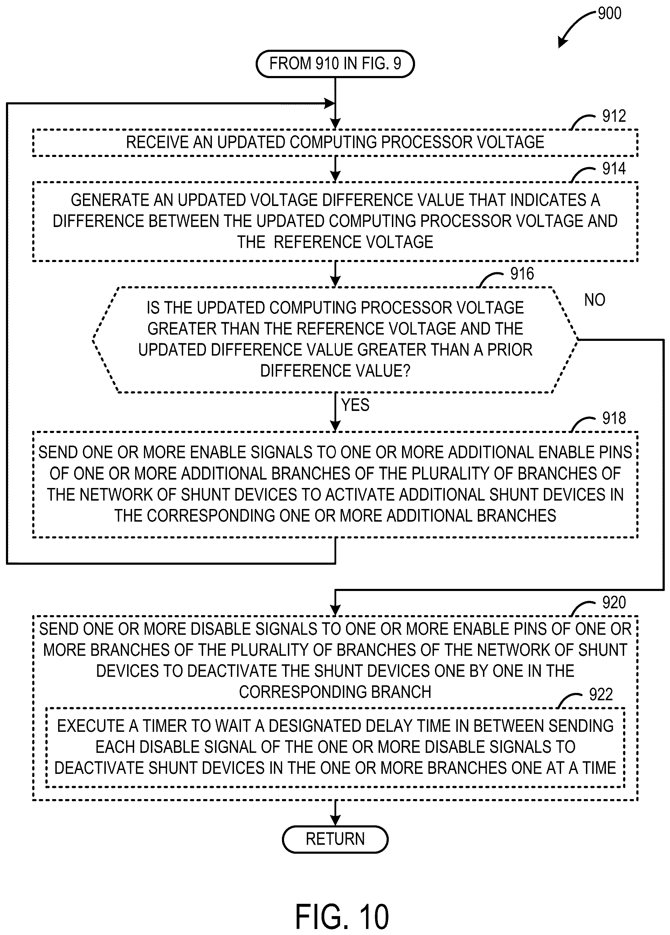

In FIG. 10, at 912, in some implementations, the method 900 may include receiving an updated computing processor voltage. For example, the computing processor voltage can be polled repeatedly. The computing processor voltage can be updated according to any suitable measurement interval. In some implementations, at 914, the method 900 may include generating an updated voltage difference value that indicates a difference between the updated processor voltage and the reference voltage. In some implementations, at 916, the method 900 may include determining that the updated computing processor voltage is greater than the reference voltage and the updated difference value is greater than a prior difference value that was generated previously (e.g., at 902). If the updated computing processor voltage is greater than the reference voltage and the updated difference value is greater than the prior difference value, then the method 900 moves to 918. Otherwise, the method 900 moves to 920. In some implementations, at 918, the method 900 may include sending one or more enable signals to one or more additional enable pins of one or more additional branches of the plurality of branches of the network of shunt devices to activate additional shunt devices in the corresponding one or more additional branches. In some examples, the number of additional branches that are enabled and correspondingly the number of additional shunt devices that are activated may be based at least on a magnitude of the updated difference value. In some implementations, at 920, it is determined that the updated computing processor voltage is greater than the reference voltage and the updated difference value is not greater than the prior difference value, and the method 900 may include sending one or more disable signals to one or more enable pins of one or more branches of the plurality of branches of the network of shunt devices to deactivate the shunt devices one by one in the corresponding branch. In some examples, the number of branches that are disabled and correspondingly the number of shunt devices that are deactivated may be based at least on a magnitude of the updated difference value. In some implementations at 922, the method 900 may include executing a timer to wait a designated delay time in between sending each disable signal of the one or more disable signals to deactivate shunt devices in the one or more branches one branch at a time.

The method 900 may be performed to selectively activate and deactivate shunt devices of the circuit 600 to induce current and thereby limit voltage overshoot during di/dt events where the demand current of the computing processor drops very quickly. By limiting voltage overshoot in this manner, stress on transistors of the computing processor can be reduced that slows the aging of the transistors, lowers the likelihood of failure of the transistors, and/or lowers the likelihood of overall degradation of the computing processor.

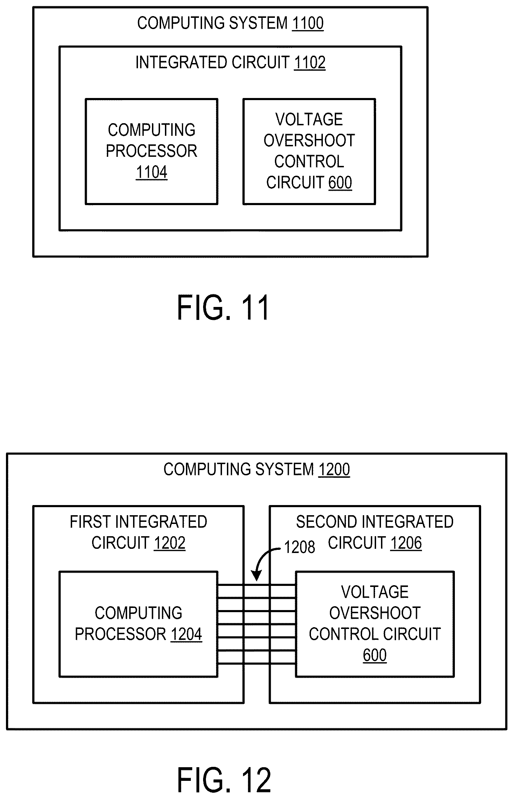

The circuit 600 for controlling voltage overshoot can be implemented in a computing system in different ways. FIG. 11 shows an example implementation in which the circuit 600 of FIG. 6 is included in a same integrated circuit as a computing processor. A computing system 1100 includes an integrated circuit 1102. The integrated circuit 1102 includes a computing processor 1104. The same integrated circuit 1102 includes the voltage overshoot control circuit 600. The shunt devices 602 of the circuit 600 are connected to power nodes and ground nodes of the computing processor 1104 on the integrated circuit 1102. The illustrated configuration can be implemented in scenarios where the computing processor 1104 and the circuit 600 are designed and manufactured together.

FIG. 12 show another example implementation in which the circuit 600 of FIG. 6 is included in an integrated circuit that is separate from an integrated circuit of a computing processor. A computing system 1200 includes a first integrated circuit 1202. The first integrated circuit 1202 includes a computing processor 1204. The computing system 1200 further includes a second integrated circuit 1206. The second integrated circuit 1206 includes the voltage overshoot control circuit 600. The shunt devices 602 of the circuit 600 are connected to power nodes and ground nodes of the computing processor 1204 on the integrated circuit first integrated circuit 1202 via a plurality of connections 1208. The illustrated configuration can be implemented in scenarios where the computing processor 1204 and the circuit 600 are designed and manufactured separately.

The voltage control circuit 600 can be implemented in any suitable computing system to control voltage overshoot of a computing processor of the computing system.

Described herein are examples relating to a circuit (600) for controlling voltage overshoot in a computing system. In one example, a circuit (600) comprises a network of shunt devices (602) arranged into a plurality of branches (604). Each branch (604) of the plurality of branches (604) includes shunt device(s) (602) connected to an enable pin (606) associated with the branch (604). Each shunt (602) is configured to induce current through a transistor (722) connected between a power node (726) and a ground node (728) when the shunt device (602) is activated. The circuit (600) comprises a controller (608) connected to a plurality of enable pins (606) corresponding to the plurality of branches (604) of the network. The controller (608) is configured to receive a computing processor voltage, generate a difference value indicating a difference between the processor voltage and a reference voltage, and send enable signal(s) to enable pin(s) (606) to activate the shunt devices (602) based at least on the difference value.

In an example, a circuit for controlling voltage overshoot in a computing system comprises a network of shunt devices arranged into a plurality of branches, wherein each branch of the plurality of branches includes one or more shunt devices connected to an enable pin associated with the branch, wherein each shunt device of the one or more shunt devices is configured to, when the shunt device is activated, induce current through a transistor connected between a power node and a ground node of the computing system, and a controller connected to a plurality of enable pins corresponding to the plurality of branches of the network of shunt devices, the controller being configured to receive a computing processor voltage of a computing processor of the computing system, generate a difference value that indicates a difference between the computing processor voltage and a reference voltage, and send one or more enable signals to one or more enable pins of one or more branches of the plurality of branches of the network of shunt devices to activate the shunt devices in the one or more branches based at least on the difference value indicating that the computing processor voltage is greater than the reference voltage. In this example and/or other examples, a number of enable signals that are sent by the controller to activate a corresponding number of branches of shunt devices of the network of shunt devices may be based at least on a magnitude of the difference value. In this example and/or other examples, a number of branches of the network of shunt devices and a number of shunt devices per branch may be based at least on a voltage tolerance range of components of the computing processor. In this example and/or other examples, each shunt device of the network of shunt devices may include a first input pin, a second input pin, and an output pin, the first input pin may be connected to an enable pin of a corresponding branch in which the shunt device is arranged, the first input pin may be further connected to a first input of a NOR gate, the second input pin may be connected to an input of a delay buffer, an output of the delay buffer may be connected to a second input of the NOR gate, an output of the NOR gate may be connected to a gate of the transistor, and the output pin of the shunt device may be electrically connected between the output of the delay buffer and the second input of the NOR gate. In this example and/or other examples, each branch of the plurality of branches of the network of shunt devices may include a plurality of shunt device in each branch, a plurality of shunt devices in a branch of the plurality of branches may be configured to activate in unison based at least on an enable signal being sent to the enable pin for the branch, and the plurality of shunt device in the branch may be configured to deactivate one by one in a cascade along the branch based at least on a disable signal being sent to the enable pin for the branch. In this example and/or other examples, the shunt device may further include a supplemental resistor connected in series with the transistor. In this example and/or other examples, for a first shunt device in each branch of the plurality of branches of the network of shunt devices, the second input pin of the shunt device may be connected to the enable pin, the output pin of the first shunt device may be connected to a second input pin of a next shunt device in the branch, and each output pin of each shunt device in the branch other than the first shunt device may be connected to a second input pin of a next shunt device in the branch. In this example and/or other examples, the controller may be configured to receive an updated computing processor voltage, generate an updated voltage difference value that indicates a difference between the updated computing processor voltage and the reference voltage, based at least on the updated computing processor voltage being greater than the reference voltage and the updated difference value being less than the difference value, send one or more disable signals to one or more enable pins of one or more branches of the plurality of branches of the network of shunt devices to deactivate the shunt devices one by one in the corresponding branch, and based at least on the updated computing processor voltage being greater than the reference voltage and the updated difference value being greater than the difference value, send one or more enable signals to one or more additional enable pins of one or more additional branches of the plurality of branches of the network of shunt devices to activate additional shunt devices in the corresponding one or more additional branches. In this example and/or other examples, the controller may be configured to execute a timer to wait a designated delay time in between sending each disable signal of the one or more disable signals to deactivate shunt devices in the one or more branches one at a time. In this example and/or other examples, shunt devices of the network of shunt devices may be connected at regular distances throughout the computing processor to induce currents across different regions of the computing processor when activated. In this example and/or other examples, the network of shunt devices may be integrated into a same integrated circuit as the computing processor. In this example and/or other examples, the computing processor may be positioned on a first integrated circuit, and the network of shunt devices may be positioned on a second integrated circuit that is separate from the first integrated circuit, and the network of shunt devices may be connected to a plurality of connection points on the first integrated circuit. In this example and/or other examples, the computing processor may be configured to have a voltage tolerance range including a maximum tolerance voltage and a minimum tolerance voltage, the computing processor may be configured to, during a full load state operate at a lower voltage setpoint that is closer to minimum tolerance voltage than the maximum tolerance voltage, and during a light load state operate at an upper voltage setpoint that is closer to maximum tolerance voltage than the minimum tolerance voltage, and wherein the reference voltage is greater than or equal to the upper setpoint voltage.

In another example, a circuit for controlling voltage overshoot in a computing system comprises a network of shunt devices arranged into a plurality of branches, wherein each branch of the plurality of branches includes a plurality of shunt devices connected to an enable pin associated with the branch, wherein the plurality of shunt device in a branch of the plurality of branches is configured to activate in unison based at least on an enable signal being sent to the enable pin for the branch, wherein the plurality of shunt device in the branch of the plurality of branches is configured to deactivate one by one in a cascade along the branch based at least on a disable signal being sent to the enable pin for the branch, wherein each shunt device of the plurality of shunt devices is configured to, when the shunt device is activated, induce current through a transistor connected between a power node and a ground node of the computing system, and a controller connected to a plurality of enable pins corresponding to the plurality of branches of the network of shunt devices, the controller being configured to receive a computing processor voltage of a computing processor of the computing system, generate a difference value that indicates a difference between the computing processor voltage and a reference voltage, and send one or more enable signals to one or more enable pins of one or more branches of the plurality of branches of the network of shunt devices to activate the shunt devices in the one or more branches based at least on the difference value indicating that the computing processor voltage is greater than the reference voltage. In this example and/or other examples, each shunt device of the network of shunt devices may include a first input pin, a second input pin, and an output pin, the first input pin may be connected to an enable pin of a corresponding branch in which the shunt device is arranged, the first input pin may be further connected to a first input of a NOR gate, the second input pin may be connected to an input of a delay buffer, an output of the delay buffer may be connected to a second input of the NOR gate, an output of the NOR gate may be connected to a gate of the transistor, and the output pin of the shunt device may be electrically connected between the output of the delay buffer and the second input of the NOR gate. In this example and/or other examples, the shunt device may further include a supplemental resistor connected in series with the transistor. In this example and/or other examples, for a first shunt device in each branch of the plurality of branches of the network of shunt devices, the second input pin of the shunt device may be connected to the enable pin, the output pin of the first shunt device may be connected to a second input pin of a next shunt device in the branch, and each output pin of each shunt device in the branch other than the first shunt device may be connected to a second input pin of a next shunt device in the branch. In this example and/or other examples, the controller may be configured to receive an updated computing processor voltage, generate an updated voltage difference value that indicates a difference between the updated computing processor voltage and the reference voltage, based at least on the updated computing processor voltage being greater than the reference voltage and the updated difference value being less than the difference value, send one or more disable signals to one or more enable pins of one or more branches of the plurality of branches of the network of shunt devices to deactivate the shunt devices one by one in the corresponding branch, and based at least on the updated computing processor voltage being greater than the reference voltage and the updated difference value being greater than the difference value, send one or more enable signals to one or more additional enable pins of one or more additional branches of the plurality of branches of the network of shunt devices to activate additional shunt devices in the corresponding one or more additional branches. In this example and/or other examples, the controller may be configured to execute a timer to wait a designated delay time in between sending each disable signal of the one or more disable signals to deactivate shunt devices in the one or more branches one at a time.

In yet another example. A circuit for controlling voltage overshoot in a computing system comprises a network of shunt devices arranged into a plurality of branches, wherein each branch of the plurality of branches includes one or more shunt devices connected to an enable pin associated with the branch, wherein each shunt device of the one or more shunt devices is configured to, when the shunt device is activated, induce current through a transistor connected between a power node and a ground node of the computing system, and a controller connected to a plurality of enable pins corresponding to the plurality of branches of the network of shunt devices, the controller being configured to receive a computing processor voltage of a computing processor of the computing system, generate a difference value that indicates a difference between the computing processor voltage and a reference voltage, wherein the computing processor is configured to have a voltage tolerance range including a maximum tolerance voltage and a minimum tolerance voltage, wherein the computing processor is configured to, during a full load state operate at a lower voltage setpoint that is closer to minimum tolerance voltage than the maximum tolerance voltage, and during a light load state operate at an upper voltage setpoint that is closer to maximum tolerance voltage than the minimum tolerance voltage, and wherein the reference voltage is greater than or equal to the upper setpoint voltage, and send one or more enable signals to one or more enable pins of one or more branches of the plurality of branches of the network of shunt devices to activate the shunt devices in the one or more branches based at least on the difference value indicating that the computing processor voltage is greater than the reference voltage.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A circuit (600) for controlling voltage overshoot in a computing system, comprising:
a network of shunt devices (602) arranged into a plurality of branches (604), wherein each branch (604) of the plurality of branches (604) includes one or more shunt devices (602) connected to an enable pin (606) associated with the branch (604), wherein each shunt device (602) of the one or more shunt devices (602) is configured to, when the shunt device (602) is activated, induce current through a transistor (722) connected between a power node (726+) and a ground node (728) of the computing system; and
a controller (608) connected to a plurality of enable pins (606) corresponding to the plurality of branches (604) of the network of shunt devices (602), the controller (608) being configured to:
receive a computing processor voltage of a computing processor of the computing system;
generate a difference value that indicates a difference between the computing processor voltage and a reference voltage; and
send one or more enable signals to one or more enable pins (606) of one or more branches (604) of the plurality of branches (604) of the network of shunt devices (602) to activate the shunt devices (602) in the one or more branches (604) based at least on the difference value indicating that the computing processor voltage is greater than the reference voltage.

2. The circuit of claim 1, wherein a number of enable signals that are sent by the controller to activate a corresponding number of branches of shunt devices of the network of shunt devices is based at least on a magnitude of the difference value.

3. The circuit of claim 1, wherein a number of branches of the network of shunt devices and a number of shunt devices per branch are based at least on a voltage tolerance range of components of the computing processor.

4. The circuit of claim 1, wherein each shunt device of the network of shunt devices includes a first input pin, a second input pin, and an output pin, wherein the first input pin is connected to an enable pin of a corresponding branch in which the shunt device is arranged, wherein the first input pin is further connected to a first input of a NOR gate, wherein the second input pin is connected to an input of a delay buffer, wherein an output of the delay buffer is connected to a second input of the NOR gate, wherein an output of the NOR gate is connected to a gate of the transistor, and wherein the output pin of the shunt device is electrically connected between the output of the delay buffer and the second input of the NOR gate.

5. The circuit of claim 4, wherein each branch of the plurality of branches of the network of shunt devices includes a plurality of shunt device in each branch, wherein a plurality of shunt devices in a branch of the plurality of branches is configured to activate in unison based at least on an enable signal being sent to the enable pin for the branch, and wherein the plurality of shunt device in the branch is configured to deactivate one by one in a cascade along the branch based at least on a disable signal being sent to the enable pin for the branch.

6. The circuit of claim 4, wherein the shunt device further includes a supplemental resistor connected in series with the transistor.

7. The circuit of claim 4, wherein, for a first shunt device in each branch of the plurality of branches of the network of shunt devices, the second input pin of the shunt device is connected to the enable pin, wherein the output pin of the first shunt device is connected to a second input pin of a next shunt device in the branch, and wherein each output pin of each shunt device in the branch other than the first shunt device is connected to a second input pin of a next shunt device in the branch.

8. The circuit of claim 1, wherein the controller is configured to:
receive an updated computing processor voltage;
generate an updated voltage difference value that indicates a difference between the updated computing processor voltage and the reference voltage;
based at least on the updated computing processor voltage being greater than the reference voltage and the updated difference value being less than the difference value, send one or more disable signals to one or more enable pins of one or more branches of the plurality of branches of the network of shunt devices to deactivate the shunt devices one by one in the corresponding branch; and
based at least on the updated computing processor voltage being greater than the reference voltage and the updated difference value being greater than the difference value, send one or more enable signals to one or more additional enable pins of one or more additional branches of the plurality of branches of the network of shunt devices to activate additional shunt devices in the corresponding one or more additional branches.

9. The circuit of claim 8, wherein the controller is configured to:
execute a timer to wait a designated delay time in between sending each disable signal of the one or more disable signals to deactivate shunt devices in the one or more branches one at a time.

10. The circuit of claim 1, wherein shunt devices of the network of shunt devices are connected at regular distances throughout the computing processor to induce currents across different regions of the computing processor when activated.

11. The circuit of claim 1, wherein the network of shunt devices is integrated into a same integrated circuit as the computing processor.

12. The circuit of claim 1, wherein the computing processor is positioned on a first integrated circuit, and wherein the network of shunt devices is positioned on a second integrated circuit that is separate from the first integrated circuit, and wherein the network of shunt devices is connected to a plurality of connection points on the first integrated circuit.

13. The circuit of claim 1, wherein the computing processor is configured to have a voltage tolerance range including a maximum tolerance voltage and a minimum tolerance voltage, wherein the computing processor is configured to, during a full load state operate at a lower voltage setpoint that is closer to minimum tolerance voltage than the maximum tolerance voltage, and during a light load state operate at an upper voltage setpoint that is closer to maximum tolerance voltage than the minimum tolerance voltage, and wherein the reference voltage is greater than or equal to the upper setpoint voltage.

14. A circuit (600) for controlling voltage overshoot in a computing system, comprising:
a network of shunt devices (602) arranged into a plurality of branches (604), wherein each branch (604) of the plurality of branches (604) includes a plurality of shunt devices (602) connected to an enable pin (606) associated with the branch (604), wherein the plurality of shunt devices (602) in a branch (604) of the plurality of branches (604) is configured to activate in unison based at least on an enable signal being sent to the enable pin (606) for the branch (604), wherein the plurality of shunt devices (602) in the branch (604) of the plurality of branches (604) is configured to deactivate one by one in a cascade along the branch (604) based at least on a disable signal being sent to the enable pin (606) for the branch (604), wherein each shunt device (602) of the plurality of shunt devices (602) is configured to, when the shunt device (602) is activated, induce current through a transistor (722) connected between a power node (726) and a ground node (728) of the computing system; and
a controller (608) connected to a plurality of enable pins (606) corresponding to the plurality of branches (604) of the network of shunt devices (602), the controller (608) being configured to:
receive a computing processor voltage of a computing processor of the computing system;
generate a difference value that indicates a difference between the computing processor voltage and a reference voltage; and
send one or more enable signals to one or more enable pins (606) of one or more branches (604) of the plurality of branches (604) of the network of shunt devices (602) to activate the shunt devices (602) in the one or more branches (604) based at least on the difference value indicating that the computing processor voltage is greater than the reference voltage.

15. The circuit of claim 14, wherein each shunt device of the network of shunt devices includes a first input pin, a second input pin, and an output pin, wherein the first input pin is connected to an enable pin of a corresponding branch in which the shunt device is arranged, wherein the first input pin is further connected to a first input of a NOR gate, wherein the second input pin is connected to an input of a delay buffer, wherein an output of the delay buffer is connected to a second input of the NOR gate, wherein an output of the NOR gate is connected to a gate of the transistor, and wherein the output pin of the shunt device is electrically connected between the output of the delay buffer and the second input of the NOR gate.
